## Europäisches Patentamt
## European Patent Office
## Office européen des brevets

(11) Publication number: **0 124 192**
**A2**

(12) **EUROPEAN PATENT APPLICATION**

(21) Application number: **84300474.8**

(22) Date of filing: **26.01.84**

(51) Int. Cl.³: **C 09 D 11/00**

(30) Priority: **02.05.83 US 490682**

(43) Date of publication of application: **07.11.84**
**Bulletin 84/45**

(84) Designated Contracting States: **DE FR GB**

(71) Applicant: **Hewlett-Packard Company, 3000 Hanover Street, Palo Alto California 94304 (US)**

(72) Inventor: **Meyer, John David, 1359 Latham Street, Mountain View California 94041 (US)**
Inventor: **Vaught, John L., 1549 Channing Avenue, Palo Alto California 94303 (US)**

(74) Representative: **Oliver, Peter Anthony, Hewlett-Packard Limited Nine Mile Ride Easthampstead, Wokingham, Berkshire RG11 3LL (GB)**

(54) **Ink for thermal ink jet printers.**

(57) An ink for a thermal ink jet printer comprises two fluids, X and Y. The X fluid is selected for its vapor bubble characteristics and the Y fluid is selected so that the XY ink has certain desired printing medium characteristics. If the superheat limit of the XY ink is kept below the midpoint temperature between the boiling point and the superheat limit of the Y fluid, then the characteristics of the vapor bubble generated during ink droplet emission are dominated by the characteristics of fluid X.

1

## INK FOR THERMAL INK JET PRINTERS

This invention is concerned with ink for thermal ink jet printers.

Thermal ink jet printers emit ink droplets in the manner described in UK Patent Application No. 8217720. Emission of an ink droplet occurs when a fast current pulse is applied to the print head resistor of a thermal ink jet printer and a vapor bubble is created in the ink supply by resistive heating of the resistor. The rapid growth of the bubble causes an impulse to propagate through the ink supply and an ink droplet is thereby emitted from an orifice in the print head. The emitted ink droplet is used to print information on a page.

In order for the thermal ink jet printer to perform properly, the ink must function both as a printing medium and as a source for vapor bubbles. Desirable printing medium characteristics include, e.g., high color contrast and low flammability. Various other factors contribute to the suitability of a given ink for creation of the vapor bubble. One in particular, the B-factor of the ink, is of fundamental importance because the extent of cavitation damage to the resistor during bubble collapse is related to the magnitude of the B-factor. The defining B-factor equation is discussed in our copending European Patent Application No. 83306808.3 and teaches that use of an ink having a B-factor which is less than 50 minimizes resistor damage. Unfortunately, it is seldom the case that a single ink has characteristics which make it desirable both as a printing medium and as a source for creation of vapor bubbles.

Attempts have been made in the prior art to creat inks having certain desired characteristics from various components. US Patent No. 4,295,889, and US Patent No. 4,243,994, teach various ink compositions having improved printing medium performance. The prior art does not teach any inks which simultaneously have desirable printing medium and vapor bubble growth characteristics.

The present invention provides an ink for a thermal ink jet printer, comprising a first fluid having a first boiling temperature and a first superheat limit, and characterized by a second fluid having a second boiling temperature and a second superheat limit, and the ink having a superheat limit which is greater than the first superheat limit and less than or equal to the second superheat limit.

It is preferred that the ink superheat limit is less than a midpoint temperature halfway between the second boiling temperature and the second superheat limit.

The ink supherheat limit may be less than or equal to the second boiling temperature.

The present invention further provides a method of producing an ink for a thermal ink jet printer, characterized by selecting a first fluid for a desired B-factor, adding a concentration of a second fluid to the first fluid to form an ink having a desired printing medium characteristic and an ink superheat limit less than or equal to a supherheat limit of the second fluid, and calculating a B-factor of the ink.

The method may be completed if the B-factor is calculated to be less than 50.

Preferably, the concentration of the second fluid is such that the ink superheat limit is less than a midpoint temperature halfway between a boiling temperature of the second fluid and the superheat limit of the second fluid.

The concentration of the second fluid may be such that the ink superheat limit is less than the boiling temperature of the second fluid.

In accordance with the illustrated preferred embodiment of the present invention, an ink has characteristics which render it desirable as both a printing medium and a vapor bubble source. The ink comprises two fluids, X and Y. The X fluid is selected on the basis of desirable vapor bubble characteristics, e.g., a low B-factor. The Y fluid is selected so that the XY ink has the desired printing medium characteristics such as low flammability. The relative concentrations of fluids X and Y are selected such that the superheat limit of the XY ink, in the ideal case, is less than or equal to the boiling point of fluid Y, or, in the acceptable case, is less than or equal to the midpoint between the boiling temperature and the superheat limit of the fluid Y. When this constraint is obeyed, one or more vapor bubble parameters are dominated by the characteristics of the X fluid. Thus, ink XY can be so selected that the printing medium characteristics are determined by both fluids and the vapor bubble characteristics are dominated by only one of the fluids.

There now follows a detailed description, which is to be read with reference to the accompanying drawings, of ink and a production method therefor according to the invention; it is to be clearly understood that the ink and method have been selected for description to illustrate the invention by way of example and not by way of limitation.

In the accompanying drawings:-

Figure 1 is a partial perspective view of a thermal ink jet print head which is useful with the preferred embodiment

0124192

of the present invention; and

Figure 2 is a flow chart depicting the various steps involved in designing an ink in accordance with the preferred embodiment of the present invention.

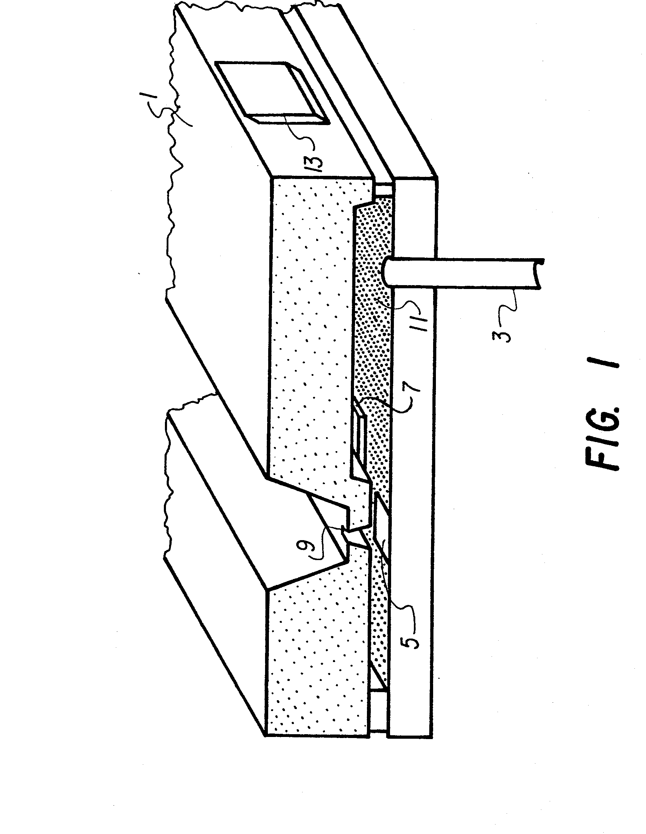

Figure 1 shows a thermal ink jet printer print head 1 which may be used to cause emission of an ink according to the preferred embodiment of the present invention. Ink is supplied through a tube 3 to a channel 11 by capillary action. When a fast current pulse (less than 8 microseconds in duration) is applied to a resistor 5, which lies within the channel 11, resistive heating of the resistor 5 causes an ink vapor bubble to be created in the ink overlaying the resistor 5. The rapid growth of the bubble causes a pressure wave, which is restricted by a barrier 7, to propagate through the ink within the channel 11 and to cause emission of an ink droplet from an orifice 9. The eventual collapse of the bubble near the resistor 5 may result in cavitation damage to the resistor 5. A thermistor-controlled heater 13 may be used to control the temperature of the print head 1.

In accordance with the preferred embodiment of the present invention, the ink which is used in the print head 1 is fabricated as a combination XY of two fluids X and Y. The fluid X is selected for its vapor bubble characteristics and the fluid Y is selected for its printing medium characteristics. Since the resistor 5 is heated by application of a fast current pulse, the surface temperature, $T_R$, of the resistor 5 must be elevated above the superheat limit, $T_{Sxy}$, of the ink so that bubble growth is dominated by spontaneous generation of vapor nuclei. The surface temperature, $T_R$, of the resistor 5, when a current pulse is applied may be calculated or may be measured directly or indirectly using any of a number of well known techniques. The superheat limit $T_{Sxy}$ of the XY ink may be found from a solution of the equation:

$$\log \left[ N \sqrt{\frac{2\sigma}{\pi m}} \cdot e^{\frac{-w}{kT_{Sxy}}} \right] = 0$$

(Equation 1)

where, $\sigma$ is the surface tension of the XY ink,

k is Boltzmann's constant,

$\sqrt{m} = C_X/m_X + (1 - C_X)\sqrt{m_y}$,

$m_X$ = molecular weight of fluid X,

$m_y$ = molecular weight of fluid Y,

$C_X$ is the concentration of the X fluid,

$N = N_X + N_y$,

$N_X$ is the number of molecules per unit volume in fluid X,

$N_y$ is the number of molecules per unit volume in fluid Y, and

w is the work of formation of the critical nucleous/bubble as defined by

where,

$$w = \frac{16\pi}{3} \frac{\sigma^3}{(P_S - p')^2 (1 - v'/v'')}$$

(Equation 2)

$P_S$ the saturated vapor pressure of the fluid X,

p' the vapor pressure of the critical bubble,

v' the specific volume of the fluid X,

v" the specific volume of the vapor.

A more detailed discussion of the superheat limit calculations may be found in Metastable Liquids by V. P. Skripov (Halstead Press, 1974) at page 18 et seq. A further discussion is in "Kinetics of Flashing of Superheated Binary Solutions" by Danilov, Sinitsyn and Skripov in JOURNAL OF HEAT TRANSFER - SOVIET RESEARCH (Vol.11, no. 6, Nov-Dec 1979).

From the known molal concentrations of the X and Y fluids in the XY ink, $T_{Sxy}$ may be found to a reasonable level of accuracy by a simple interpolation between the superheat limits, $T_{Sx}$ and $T_{Sy}$, of the X and Y fluids respectively. A discussion of this interpolation may be found in an article by Blander et al in J. PHYS. CHEM., vol.75 at page 3613 et seq (1971).

The selection of the X and Y fluids for the XY ink for the desired printing medium characteristics may be made easily on the basis of the molal concentrations of the two fluids since the printing medium characteristics of the XY ink are operative in the fluid regime.

The selection of the X and Y fluids for a low B-factor of the XY ink may be made in accordance with the above-mentioned European Patent Application No. 83306808.3 wherein the B-factor is defined as:

$$B_{eff} = \psi^2 \left(\frac{\rho c}{\overline{\rho_v}} \frac{\Delta T}{L}\right)^2 \left(\frac{K}{R_o}\right) \left(\frac{\rho}{\Delta p}\right)^{\frac{1}{2}}$$

(Equation 3)

where, $\psi$ is a temperature difference correction factor,

$\rho$ is the density of the ink used,

c is the specific heat of the ink used,

$\Delta T$ is the difference between the ambient temperature and the boiling point of the ink,

$\overline{\rho_v}$ is the average vapor density,

L is the latent heat of vaporization of the ink used,

K is the thermal diffusivity of the ink being used,

$R_o$ is the maximum radius of a bubble created in the ink supply,

$\Delta p$ is the difference between ambient pressure and the vapor pressure of the ink being used.

All of the variables in Equation 1 except for $\overline{\rho_v}$, the average vapor density, are determined by analysis of the XY ink in the fluid regime. This determination may easily be made with the use of the known molal concentrations of the X and Y fluids within the XY ink using well known methods. A summary of these methods is contained in Chapter 14 of Castellan's <u>Physical Chemistry</u> (Addison Wesley Co., 3d ed, 1983) at pages 295-309.

When a fast current pulse (less than 8 microseconds in duration) is applied to the resistor 5 the temperature gradient within the ink supply near the resistor 5 is very steep. The elevation in ink temperature does not extend more than a few microns into the ink supply from the surface of the resistor 5. Thus, only the higher activation temperature surface sites on the resistor 5 are capable of initiating vaporization of the ink and these surface sites are not activated effectively unless $T_R$ reaches or exceeds the superheat limit of the fluid to be vaporized. Therefore, $T_R$ need only reach or exceed $T_{Sx}$ and $T_{Sxy}$ in order for the vapor bubble comprising a vapor of fluid X to be generated. But, if $T_R$ does not exceed $T_{By}$, the fluid Y cannot even boil and the vapor bubble will contain at most a fine aerosol of fluid Y. Further, as long as $T_R$ is kept below the superheat limit, $T_{Sy}$, of fluid Y, the only vaporization of fluid Y will be due to boiling and not to spontaneous generation of vapor nuclei and the vapor bubble will be dominated by the fluid X vapor. As a practical matter, if $T_R$ only reaches or barely exceeds $T_{Sxy}$ and $T_{Sxy}$ is kept below the midpoint between $T_{By}$ and $T_{Sy}$, i.e., $(T_{By}+T_{Sy})/2$, the vapor bubble will contain only a negligible fraction of fluid Y vapor.

If the constraint that $T_{Sxy}$ is less than the midpoint temperature, $(T_{By}+T_{Sy})/2$, of fluid Y is obeyed, then the characteristics of the vapor bubble generated by the resistor 5 will be dominated by the characteristics of the fluid X. Thus, the average vapor density, $\overline{\rho_v}$, which is required for calculation of the B-factor and which is defined as:

$$\overline{\rho_v} \;=\; \frac{1}{\Delta T} \int_{T_\infty}^{T_{SAT}} \overline{\rho_v}\,(T)\ dT'$$

(Equation 4) ·

may be calculated using only the fluid X parameters. Since the average vapor density is an inverse squared term in the B-factor calculation, changing the X fluid can have a major impact on the magnitude of the B-factor. Cavitation damage to the resistor 5 will be minimized if an XY ink is used which has a B-factor less than 50.

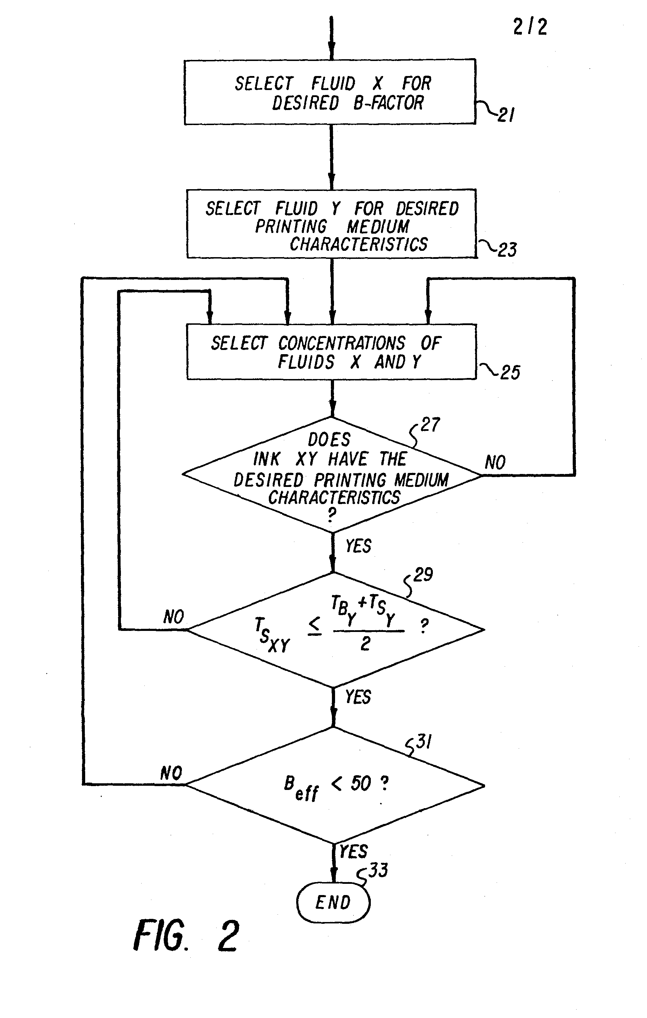

Figure 2 is a flow chart of a method for designing an XY ink using the equations and parameters discussed above. In step 21, an X fluid is selected for a desired B-factor. This will typically require that the B-factor be less than 50 so that the addition of a fluid Y having a higher B-factor will not elevate the B-factor of the XY ink to 50. Since it is probable that the low B-factor X fluid will have certain undesirable printing medium characteristics, such as high flammability, in step 23, a desired fluid Y is chosen to overcome these undesired traits. In step 25, the concentrations of fluids X and Y are selected. This selection is usually done on the basis of alleviating the undesired printing medium characteristics of the fluid X. If, in step 27, it is determined that the desired printing medium characteristics are not present, then step 25 is repeated. In step 29 if $T_{Sxy}$ is greater than the midpoint temperature of fluid Y, then step 25 is repeated. It should be remembered that the ideal case is where $T_{Sxy}$ is less than $T_{By}$. If $T_{Sxy}$ is less than the midpoint temperature of fluid Y, the B-factor of the XY ink is determined in step 31. If the B-factor is less than 50, the XY ink is accepted. If not, step 25 is repeated. It should be noted that not all XY inks will meet the criteria of Figure 2 and it may be necessary to replace fluids X and Y in order to create an acceptable ink. Further, any dye added to ink XY will have but a negligible effect on the printing medium and vapor bubble characteristics if the dye concentration is kept low and the dye has a high decomposition temperature.

An XY ink was selected in accordance with the method shown in Figure 2. The X fluid comprises isopropyl alcohol (IPA) and the Y fluid comprises diethylene glycol (DEG) in a 20:80, X:Y, ratio by volume and a .28:.72 molal ratio. $T_{Bx}$ was 80°C and $T_{Sx}$ was 184°C. $T_{Sxy}$ was 306°C which was less than the fluid Y midpoint temperature of 300°C. The XY ink, unlike pure IPA, was found to be nonflammable and the XY ink performed acceptably both as a printing medium and as a vapor bubble source.

CLAIMS

1.    An ink for a thermal ink jet printer, comprising:

a first fluid having a first boiling temperature and a first superheat limit; and characterized by:

a second fluid having a second boiling temperature and a second superheat limit; and

the ink having a superheat limit which is greater than the first superheat limit and less than or equal to the second superheat limit.

2.    An ink according to claim 1 characterized in that the ink superheat limit is less than a midpoint temperature halfway between the second boiling temperature and the second superheat limit.

3.    An ink according to claim 1 wherein the ink superheat limit is less than or equal to the second boiling temperature.

4.    A method of producing an ink for a thermal ink jet printer, characterized by:

selecting a first fluid for a desired B-factor (21);

adding a concentration of a second fluid to the first fluid (25) to form an ink having a desired printing medium characteristic and an ink superheat limit less than or equal to a superheat limit of the second fluid (27,29); and

calculating a B-factor of the ink (31).

5.    A method according to claim 4, characterized in that the method is completed if the B-factor is calculated to be less than 50.

0124192

6.  A method according to either one of claims 4 and 5, characterized in that the concentration of the second fluid is such that the ink superheat limit is less than a midpoint temperature halfway between a boiling temperature of the second fluid and the superheat limit of the second fluid.

7.  A method according to either one of claims 4 and 5, characterized in that the concentration of the second fluid is such that the ink superheat limit is less than the boiling temperature of the second fluid.

**FIG. 1**

FIG. 2